## Europäisches Patentamt
## European Patent Office
## Office européen des brevets

(11) Veröffentlichungsnummer: **0 010 614**

**A1**

# (12) EUROPÄISCHE PATENTANMELDUNG

(21) Anmeldenummer: **79103650.2**

(22) Anmeldetag: **26.09.79**

(51) Int. Cl.³: **B 21 K 1/20, F 16 K 27/10**

(30) Priorität: **02.11.78 DE 2847579**

(43) Veröffentlichungstag der Anmeldung: **14.05.80**
**Patentblatt 80/10**

(84) Benannte Vertragsstaaten: **BE DE FR GB IT LU NL**

(71) Anmelder: **Thyssen Industrie AG, Am Thyssenhaus 1, D-4300 Essen (DE)**

(72) Erfinder: **Müller, Erwin, Auf dem Schnee 66, D-5804 Herdecke (DE)**
Erfinder: **Kollmann, Bernd, Dorneystrasse 41, D-5810 Witten (DE)**
Erfinder: **Sonnabend, Ferdinand, Baroper Schulstrasse 13a, D-4600 Dortmund (DE)**
Erfinder: **Petzolt, Gert, Wagenfeldstrasse 16, D-4717 Nordkirchen (DE)**
Erfinder: **Balz, Josef, Amtsstrasse 80, D-4620 Castrop-Rauxel (DE)**
Erfinder: **Walloschek, Bernhard, Sträterkampstrasse 10, D-5810 Witten (DE)**
Erfinder: **Risse, Friedrich, Auf dem Aspei 32, D-4630 Bochum (DE)**

(74) Vertreter: **Eberhard, Friedrich, Dr., Am Thyssenhaus 1, D-4300 Essen (DE)**

(54) **Verfahren zum Herstellen von einem in der Sicherheitstechnik - z.B. im Kernreaktorbau - mit hoher und höchster Sicherheitsstufe einsetzbaren Armaturengehäuse.**

(57) Dieses Verfahren ermöglicht, im drucktechnischen Bereich des Kernreaktorbaus, wo hohe Sicherheitsstufen verlangt werden, Armaturen, wie Schieber, von bis etwa 1000 mm Nennweiten zu verwenden, und zwar durch Herstellung des Schiebergehäuses (1) aus schmiedbarem Stahl. Der warme Block wird zuerst in einer Matrize zu einem einseitig offenen, rohrförmigen Ausgangskörper nahtlos verformt.

Am offenen Ende wird dann eine Materialverdickung (6) aufgestaucht, um dort einen zylindrischen Teil (39) mit größerem Durchmesser herzustellen. Der darunterliegende Teil wird abgeflacht, so daß zwei parallele Wände (23) entstehen. Diese sind mit je einer zueinander koaxialen Durchbrechung versehen, die durch Kragen (10, 11) von Gehäuserohrstutzen (8, 9) verschlossen werden. Am Kragenumfang erfolgt die Verschweißung (12, 13) der Stutzen (8, 9) mit dem Gehäuse (1). Die symmetrisch in das Gehäuseinnere ragenden Stutzenenden (14, 15) bilden die Dichtungsflächen (16, 17) für den Absperrkörper (3). Dank der Gehäuseabflachung und der dadurch bedingten guten Zugänglichkeit der Schweißnähte (12, 13) können diese auch während des Betriebes durch Ultraschall- und Röntgengeräte geprüft werden.

Essen, den 24.8.1979
PZ 3160   Va/bk

THYSSEN INDUSTRIE AG
Am Thyssenhaus 1
4300 Essen 1

Verfahren zum Herstellen von einem in der Sicherheitstechnik - z.B. im Kernreaktorbau - mit hoher und höchster Sicherheitsstufe einsetzbaren Armaturengehäuse ...

Zur Herstellung von im Kernreaktorbau eingesetzten Schiebergehäusen mit großen bis sehr großen Nennweiten von z.B. 300 bis 600 Millimetern ist man beispielsweise so vorgegangen, daß man das gesamte Armaturengehäuse aus einem Stahlblock herausgearbeitet, z.B. herausgefräst hat. Damit sind außerordentlich große Kosten verbunden.

Auch hat man schon in der Öffentlichkeit vorgeschlagen, Schiebergehäuse mit derart großen Nennweiten für Sicherheitsbereiche zu bauen, deren Schiebergehäuse aus zwei Hälften bestehen, die durch eine Längsnaht miteinander verbunden sind. Auch die Ventilsitzringe, mit denen der eigentliche Absperrkörper, also der Schieber, zusammenarbeitet, sind durch Schweißnähte innen mit dem Schiebergehäuse verbunden. Eingeschweißt werden auch Gehäuserohrstutzen, die zum Anschluß der eigentlichen Rohrleitungen, dienen. Schließlich wird noch ein oberer Flansch angeschweißt, mit dem ein Deckel durch Schrauben verbunden werden kann, obwohl bei solchen Konstruktionen es auch bekannt ist, derartige Deckel in Nuten einzusetzen, um das Anschweißen von Flanschen zu vermeiden.

- 2 -

Bei Schiebern, die im erhöhten Sicherheitsbereich, beispielsweise in Kernkraftwerken eingesetzt werden, müssen
die Schweißnähte qualitativ den höchsten Anforderungen
genügen. Dies bedingt, daß die Schweißnähte eigentlich
röntgenfähig, aber auch ultraschallprüffähig sein müssen.
Diese Forderungen lassen sich aber bei den bisherigen
Konstruktionen nicht erfüllen, weil z.B. bei der zuletzt
beschriebenen Konstruktion es wegen der Lage der Schweißnähte nicht möglich ist, das Röntgen- und das Ultraschallprüfverfahren anzuwenden. Dies hat seinen Grund
darin, daß kein ausreichender Anfahrweg für den Prüfkopf
des Ultraschallgerätes zur Verfügung steht. Es ist auch
schwierig, sie zu röntgen.

Da bei konventionellen Schiebergehäusen mit derart großen
Nennweiten zahlreiche Schweißnähte, oftmals sechs Schweißnähte und mehr vorhanden sind, also das Schiebergehäuse
eigentlich aus einer recht großen Anzahl von zusammengeschweißten Einzelteilen besteht, ist eine solche Konstruktion im Sicherheitsbereich eigentlich untragbar.

Es gibt noch zahlreiche Armaturengehäuse, insbesondere
Schiebergehäuse, die jedoch nicht im Sicherheitsbereich,
insbesondere im Kernreaktorbau, verwendbar sind, weil
es sich um kleinere Absperrschieber handelt, wobei darüberhinaus die Schweißnähte ebenfalls nicht röntgenfähig
und zusätzlich ultraschallprüffähig sind. Darüber hinaus
sind zahlreiche Konstruktionen recht aufwendig, weil sie
aus vielen Einzelteilen bestehen, die relativ hochwertig
bearbeitet werden müssen und sich zur Herstellung großer
und größter Armaturen, beispielsweise von 300 bis 1000
Millimetern Nennweite, nicht eignen (W. Kranert "Fortschritte in der Armaturentechnik unter besonderer Berücksichtigung der Qualitätsüberwachung", 3R international,
15. Jahrgang, Heft 9, September 1976, Seiten 530 bis 535;
Ludwig Zeyen und Wilh. Lohmann "Schweißen der Eisenwerk-

- 3 -

stoffe", 2. Auflage, 1948, Verlag Stahleisen mbH, Düsseldorf, Seite 297; Paul Schimpke und Hans A. Horn, 3. Auflage, "Praktisches Handbuch der gesamten Schweißtechnik", Springer-Verlag 1943, Berlin, Seiten 173/180; DE-PS 755 989, 973 519, 1 928 585, 1 000 652; DE-AS 2 032 132, 1 425 710, 21 64 929, 23 54 246; bekanntgemachte Patentanmeldung S 28 115 XII/47g, Klasse 47g, Gruppen 39 01; DE-OS 2 057 746, 1 928 686, 2 114 068, 2 041 333; DE-GM 7 031 192).

Der Erfindung liegt die Aufgabe zugrunde, ein Verfahren zum Herstellen von in der Sicherheitstechnik, z.B. im Kernreaktorbau, mit hoher und höchster Sicherheitsstufe einsetzbaren Armaturengehäusen aus Stahl o.dgl., insbesondere von Schiebergehäusen mit großen bis sehr großen Nennweiten, zu schaffen. Unter großen bis sehr großen Nennweiten werden solche von etwa 300 bis etwa 1000 Millimetern verstanden. Das erfindungsgemäß angestrebte Verfahren soll relativ einfach sein und ein Erzeugnis liefern, das unbedenklich z.B. im Kernreaktorbau, und zwar in der höchsten Sicherheitsstufe, einsetzbar ist. Dabei sollen sich etwaige Schweißnähte sowohl röntgen als auch durch Ultraschall prüfen lassen.

Darüber hinaus liegt der Erfindung die Aufgabe zugrunde, eine Armatur, vornehmlich ein Schiebergehäuse mit großer bis sehr großer Nennweite zu schaffen, vornehmlich in dem vorbeschriebenen Nennweitenbereich von etwa 300 bis etwa 1000 Millimetern. Dieses Schiebergehäuse soll sich auch unter Betriebsbedingungen in der betreffenden Sicherheitsstufe, also ohne Ausbau, z.B. in Kernkraftwerken, beliebig oft prüfen lassen. Das bedeutet, daß beliebig oft Wiederholungsprüfungen, beispielsweise durch Ultraschall, durchführbar sein sollen, und zwar auch an etwaigen Schweißnähten. Das Armaturengehäuse soll relativ einfach aufgebaut sein, aus verhältnismäßig wenigen Einzelteilen bestehen und sich relativ preisgünstig fertigen lassen.

Die Aufgabe bezüglich des Verfahrens wird durch die im Anspruch 1 wiedergegebenen Merkmale gelöst.

Bei Anwendung des erfindungsgemäßen Verfahrens lassen sich Armaturen, insbesondere Schiebergehäuse, herstellen, die nicht mehr wie bisher unbedingt aus mehreren Teilen zusammengeschweißt werden müssen. Vielmehr wird es durch die Erfindung ermöglicht, einteilige Armaturengehäuse zu fertigen, und zwar mit großen bis größten Durchmessern von z.B. 300 bis 1000, vorzugsweise bis etwa 600 Millimetern.

Ein besonderer Vorteil ist dabei darin zu erblicken, daß durch die Verformung des Armaturengehäuses auf mindestens zwei diametral gegenüberliegenden Seiten sich verhältnismäßig große ebenflächige Wände herstellen lassen, die im Bedarfsfalle mit einer oder mehreren Durchgangsöffnungen versehen werden können. In diesen Durchgangsöffnungen können Gehäuserohrstutzen eingeschweißt werden. Da der Durchmesser der eingeschweißten Gehäuserohrstutzen erheblich bis sehr viel kleiner ist als die Querabmessungen der ebenflächigen Wände, sind die Schweißnähte sowohl röntgenfähig als auch ultraschallprüffähig. Beispielsweise kann der Prüfkopf eines Ultraschallprüfgerätes ohne Schwierigkeiten auf der rundum eines Gehäuserohrstutzens verbleibenden ebenflächigen Wand herangeführt werden, so daß sich eine einwandfreie Prüfcharakteristik ergibt.

Solchermaßen hergestellte Armaturengehäuse, beispielsweise in Kernkraftwerken eingesetzte Schieber, lassen sich beliebig oft, und zwar auch unter Betriebsbedingungen, prüfen. Deshalb ist es ohne Schwierigkeiten möglich, die Schweißnähte von ggf. koaxial zueinander angeordneten und diametral einander gegenüberliegenden Gehäuserohrstutzen beliebig oft unter Betriebsbedingungen zu prüfen.

Dabei ist es besonders vorteilhaft, daß sich die Größe der ebenflächigen Wandungen je nach der Größe des betreffenden Armaturengehäuses, beispielsweise eines Schiebergehäuses, der Lage der Schweißnähte und den angewandten Prüfbedingungen praktisch beliebig groß herstellen läßt, da dazu lediglich der rohrförmige Ausgangskörper auf den betreffenden Längenabschnitt auf mindestens zwei einander diametral gegenüberliegenden Seiten in der erfindungsgemäßen Art und Weise ebenflächig verformt zu werden braucht.

Diese ebenflächigen Wandungen ermöglichen es außerdem, innen und/oder außen Anfasungen oder sonstige spanabhebende Bearbeitungen vorzunehmen, falls dies unter Berücksichtigung der vorliegenden Betriebsbedingungen notwendig oder zweckmäßig sein sollte.

Wird das erfindungsgemäße Verfahren zur Herstellung von im Sicherheitsbereich, beispielsweise in Kernkraftwerken, eingesetzten großen Schiebergehäusen angewandt, so wird das Schiebergehäuse in der Regel mit zwei diametral zueinander angeordneten Gehäuserohrstutzen versehen sein, zwischen deren einander zugekehrten Mündungsöffnungen der Absperrkörper (Abschlußkeil) wirkt. Auch in diesem Fall werden im Gegensatz zu vorbekannten Bauarten sehr wenige Schweißnähte, nämlich je eine Schweißnaht für jeden Gehäuserohrstutzen, also insgesamt nur zwei Schweißnähte, die voll röntgen- und ultraschallprüffähig sind, benötigt und nicht mehr - wie bisher - sechs und mehr Schweißnähte für derart große Schiebergehäuse von z.B. 300 bis 600 Millimetern Nennweite.

In Anspruch 2 ist eine besonders vorteilhafte Verfahrensweise beschrieben, bei welcher der Rohling in einem geeigneten Warmverformungsverfahren, beispielsweise durch
Aufdornen, nahtlos zu einem rohrförmigen Ausgangskörper
verformt bzw. gezogen wird. Dieser Ausgangskörper kann
anschließend z.B. durch Ziehen durch einen Ziehring kalibriert werden. Der so hergestellte, nahtlose, rohrförmige
Körper wird dann in der beschriebenen Art und Weise auf
mindestens zwei diametral gegenüberliegenden Seiten -
vorzugsweise ebenfalls im Warmverformungsverfahren- ebenflächig verformt, beispielsweise flach gepreßt.

Besonders vorteilhaft ist auch die Verfahrensweise nach
Anspruch 3, bei welcher gleichzeitig oder anschließend
mit der Herstellung von zwei einander diametral gegenüberliegenden, ebenflächigen Wänden zwei weitere, ebenfalls diametral gegenüberliegende, ebenflächige Wände
geformt werden, die zu dem anderen ebenflächigen Wandungspaar rechtwinklig verlaufen können und beispielsweise
innen und außen etwa eine Rechteckform umgrenzen. Auf
diese Weise werden große Anfahrflächen für den Prüfkopf
eines Ultraschallprüfgerätes bei verhältnismäßig geringen
Querabmessungen des rohrförmigen Ausgangskörpers erreicht
(Anspruch 4).

In Anspruch 5 ist eine vorteilhafte und schnell durchzuführende Verfahrensweise beschrieben, mit der sich der
rohrförmige, kalibrierte Ausgangskörper, der das Armaturengehäuse bildet, bereichsweise ebenflächig verformen,
beispielsweise polygonförmig warmverformen läßt.

In Anspruch 6 ist eine vorteilhafte Verfahrensweise beschrieben. Der Kragen des Gehäuserohrstutzens kann dabei
so groß gewählt werden, daß die Schweißnaht in einem erheblichen Abstand von der äußeren Mantelfläche des betreffenden Rohrstutzens zu liegen kommt.

Die Aufgabe betreffend ein Armaturengehäuse, vornehmlich ein Schiebergehäuse, wird durch die im Anspruch 7 wiedergegebenen Merkmale gelöst.

Ein erfindungsgemäßes Armaturengehäuse weist extrem wenige Schweißnähte auf, auch dann, wenn - wie oft üblich - im etwa mittleren Längenbereich des Gehäuses zwei Gehäuserohrstutzen koaxial zueinander angeordnet werden. Deshalb läßt sich ein erfindungsgemäßes Gehäuse selbst bei größten Nennweiten von z.B. etwa 300 bis 1000 Millimetern, vorzugsweise 300 bis 600 Millimetern Nennweite, mit besonderem Vorteil auch im Kernreaktorbau einsetzen. Es braucht somit nicht mehr - wie bisher - ein solches Armaturengehäuse, beispielsweise ein Schiebergehäuse, aus einem vollen Metallblock herausgefräst zu werden. Infolgedessen ist ein gemäß der Erfindung ausgestaltetes Armaturengehäuse, z.B. ein Schiebergehäuse, relativ preiswert und genügt trotzdem allen Sicherheitsanforderungen der höchsten Sicherheitsstufen.

Aus Anspruch 8 ist eine weitere vorteilhafte Ausführungsform der Erfindung zu entnehmen.

In der Zeichnung ist die Erfindung an mehreren Ausführungsbeispielen - teils schematisch - veranschaulicht. Es zeigen:

Fig. 1   einen Schieber gemäß der Erfindung, und zwar im Längsschnitt;

Fig. 2   das Herstellen eines rohrförmigen Ausgangskörpers in einer Matrize, im Längsschnitt;

Fig. 3   das Kalibrieren eines rohrförmigen Ausgangskörpers, ebenfalls im Längsschnitt;

Fig. 4   das Herstellen von glattwandigen Wänden, ebenfalls im Teillängsschnitt;

Fig. 5   einen Querschnitt zu Fig. 4;

Fig. 6    eine weitere Verfahrensweise, bei welcher ein Teil eines Armaturengehäuses an vier Seiten ebenflächig gepreßt wird;

Fig. 7    eine Einzelheit aus Fig. 1 in größerem Maßstab, im Schnitt;

Fig. 8    eine teilweise Seitenansicht zu Fig. 7;

Fig. 9    einen Längsschnitt durch ein Schiebergehäuse, das noch nicht mit Durchbrechungen für Gehäuserohranschlußstutzen versehen ist und

Fig.10    einen gegenüber der Darstellung aus Fig. 9 um 90 Grad versetzten Längsschnitt durch das Schiebergehäuse.

In der Zeichnung ist die Erfindung in Anwendung auf ein großes Schiebergehäuse veranschaulicht, das in Kernkraftwerken zur Anwendung gelangen soll.

Mit dem Bezugszeichen 1 ist ein Schiebergehäuse bezeichnet, in dem eine Spindel 2 mit einem als Abschlußkeil ausgebildeten Absperrkörper 3 in Richtung X bzw. Y verstellbar angeordnet ist. Die Spindel 2 ist über geeignete Dichtungen 4 in einem Gehäusedeckel 5 verschieblich gelagert. Der Gehäusedeckel 5 ist durch mehrere in der Zeichnung nicht besonders veranschaulichte Deckelschrauben mit einem angestauchten Flansch 6 des Schiebergehäuses 1 fest, aber lösbar sowie druckmitteldicht verbunden.

Das Bezugszeichen 7 bezeichnet eine geeignete Dichtung.

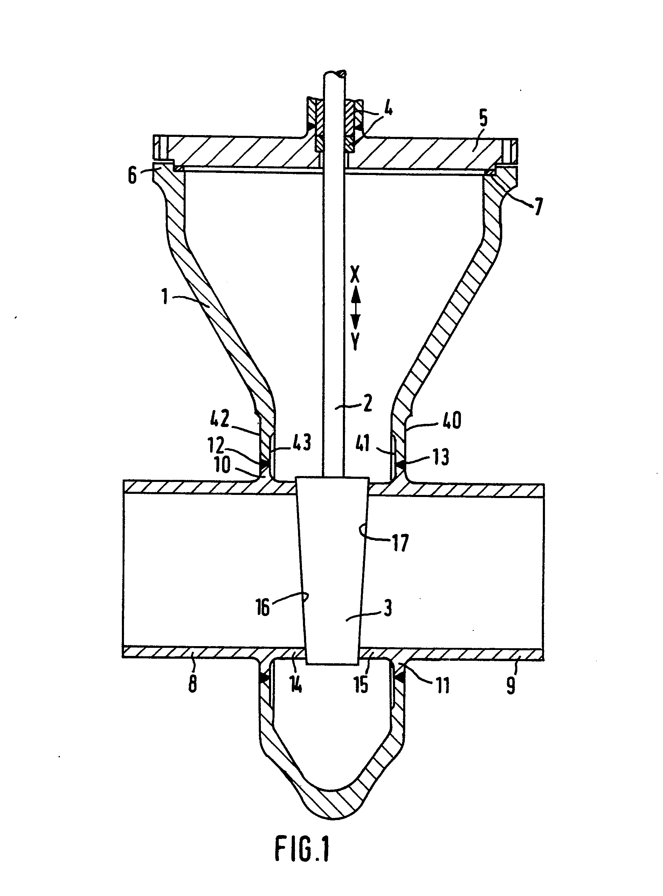

Wie die Fig. 1 erkennen läßt, sind auf diametral einander gegenüberliegenden Seiten koaxial zueinander verlaufende Gehäuserohrstutzen 8 und 9 vorgesehen, die je einen ringkragenförmigen Vorsprung 10 bzw. 11 aufweisen. Jeder Vorsprung 10 bzw. 11 ist durch je eine Schweißnaht 12 bzw. 13 in der noch zu beschreibenden Art und Weise mit dem Schiebergehäuse 1 fest und druckmitteldicht verbunden.

Jeder Gehäuserohrstutzen 8 bzw. 9 ragt jeweils mit einem Rohrvorsprung 14 bzw. 15 in das Innere des betreffenden Schiebergehäuses 1 hinein und bildet hier Ventilsitzflächen 16 bzw. 17 für den Absperrkörper 3. Mit den Gehäuserohrstutzen 8 und 9 sind dann in üblicher Weise die nicht dargestellten Rohre verbunden.

Statt - wie in Fig. 1 dargestellt - einer Anstauchung 6 kann das Schiebergehäuse in diesem Bereich auch zylindrisch ausgestaltet und innen mit einer oder mehreren Nuten versehen sein, in welcher bzw. in welchen der Gehäusedeckel 5 druckmitteldicht befestigt wird.

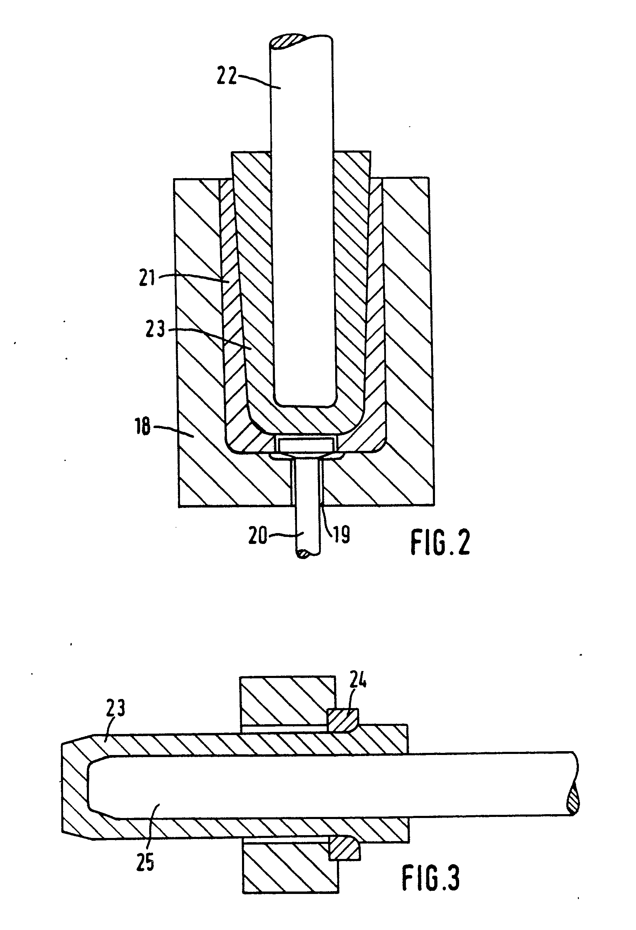

Anhand der Figuren 2 bis 6 soll nunmehr die Herstellung des Schiebergehäuses 1 näher erläutert werden:

In Fig. 2 ist mit dem Bezugszeichen 18 ein Lochtopf bezeichnet, der an seinem Boden mit einer zentrischen Öffnung 19 versehen ist, durch welche ein Ausstoßer 20 hindurchgreift. 21 ist eine Matrize, die satt an den Innenwandungen des Lochtopfes 18 anliegt und ebenso wie der Lochtopf 18 an ihrer in der Zeichnungsebene gesehen oberen Seite offen ausgebildet ist.

Der warme Block wird vor die Mündungsöffnung dieser Matrize 21 gebracht und durch einen Lochdorn 22 zu dem aus der Fig. 2 ersichtlichen rohrförmigen Ausgangskörper 23 warm verformt. Dieser rohrförmige Ausgangskörper 23 wird anschließend - ggf. nach Wiedererwärmung - durch einen Ziehring 24 (Fig. 3) kalibriert, durch den der Ausgangskörper 23 mittels einer Dornstange 25 hindurchgezogen wird. Dadurch ergibt sich ein rohrförmiger Körper, der lediglich an seiner einen Stirnseite offen ausgebildet und ansonsten nahtlos ist und die jeweils gewünschte Wandstärke aufweist.

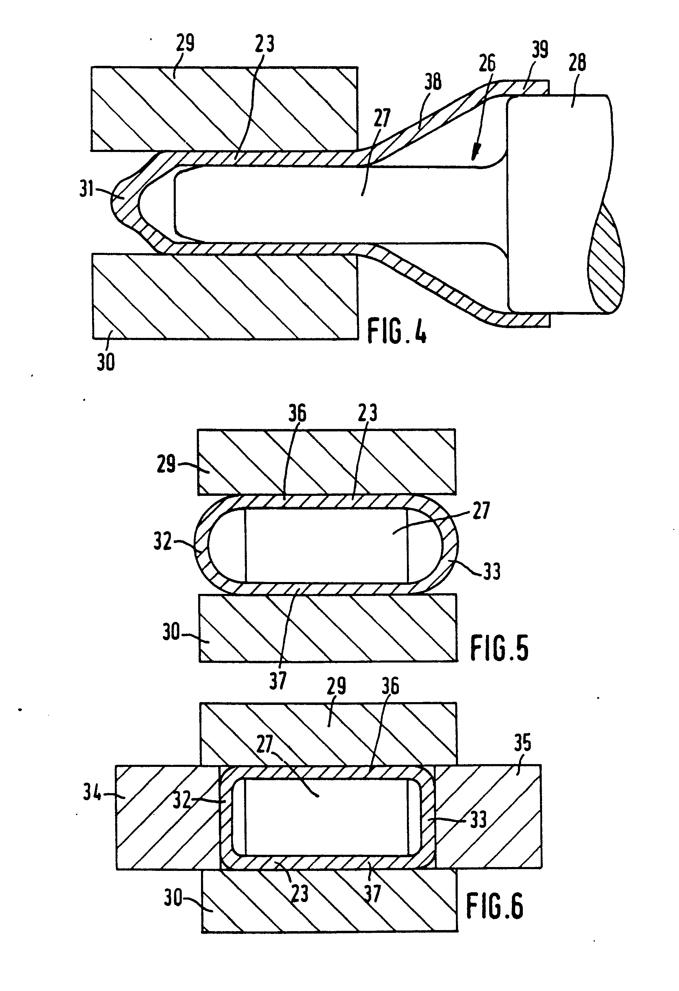

In Fig. 4 ist in den rohrförmigen Ausgangskörper 23 ein Werkzeug 26 eingebracht worden, das zwei Abschnitte, und zwar 27 und 28 mit unterschiedlichen Querabmessungen aufweist. Der Abschnitt 27 ist im Querschnitt rechteckförmig gestaltet, also von ebenflächigen Wänden umgrenzt, während der mit dem Abschnitt 27 materialmäßig einstückige Abschnitt 28 zylindrisch ausgebildet ist. Wie die Fig. 4 erkennen läßt, werden gegen einen Längenabschnitt des Ausgangskörpers 23 zwei Schmiede- oder Preßbacken 29 bzw. 30 mit ebenen Flächen gegengefahren, derart, daß ein Teil des rohrförmigen Ausgangskörpers 23 gegen den Abschnitt 27 verformt wird, bis dieser ebenflächig mit seiner Innenseite an dem Abschnitt 27 anliegt und gleichzeitig auch die Außenflächen wie die Schmiede- bzw. Preßbacken ebenflächig verformt sind. Das geschlossene Ende 31 des Ausgangskörpers 23 wird dabei durch das Fließen des Materials nach vorn ausgeformt. Die Fig. 5 läßt deutlich erkennen, daß bei dieser Ausführungsform der mit den Schmiede- bzw. Preßbacken 29 und 30 in Berührung gelangende Längenbereich des rohrförmigen Ausgangskörpers 23 an zwei diametral gegenüberliegenden Seiten innen und außen ebenflächig verformt wird, während die beiden anderen Seiten 32 und 33 etwa kreisbogenförmig nach außen gedrückt werden, also gekrümmt verlaufen. Werden - wie aus Fig. 6 hervorgeht - auch gegen diese beiden Seiten 32 und 33 Schmiede- bzw. Verformungswerkzeuge 34 und 35 zur Anlage gebracht bzw. relativ aufeinanderzubewegt, so werden auch diese Seiten ebenflächig verformt. Lediglich im Bereich der Kanten verbleiben verhältnismäßig geringe Radien, unter denen die Seiten 32 und 33 in die beiden anderen Seitenwände 36 bzw. 37 übergehen. Dadurch wird der rohrförmige Ausgangskörper 23 in diesem Längenbereich im Querschnitt innen und außen etwa rechteckförmig verformt.

Sowohl bei der Ausführungsform nach Fig. 4 und 5 als auch bei der Ausführungsform nach Fig. 6 schließt sich an den mit ebenen Flächen 36 und 37 (Fig. 5) sowie ggf. zusätzlich 32 und 33 (Fig. 6) versehenen Längsbereich ein etwa dachartiger Längenabschnitt 38 an, der in einen zylindrischen Längenabschnitt 39 übergeht. Letzterer wird durch das Teil 28 des Werkzeuges 26 unterstützt, so daß es sich nicht verformen kann. Die Wandungsteile im Bereich der offenen zylindrischen Mündung können - wie bei der Ausführungsform nach Fig. 1 - warm oder kalt angestaucht werden, so daß hier eine Art Flansch entsteht, mit der ein Gehäusedeckel (Fig. 1) verbunden werden kann.

Im Anschluß an die aus den Figuren 2 bis 6 ersichtlichen Verformungsvorgänge oder auch gleichzeitig mit einer oder mehreren Verformungsstufen können Durchbrechungen für den Anschluß der Gehäuserohrstutzen 8 und 9 oder auch nur eines Gehäuserohrstutzens hergestellt werden. Wie insbesondere deutlich aus Fig. 6 hervorgeht, ergeben sich sehr große Anfahrflächen für einen Prüfkopf eines Ultraschallprüfgerätes, so daß sich die Schweißnähte 12 und 13 nicht nur röntgen, sondern auch durch Ultraschall prüfen lassen.

Bei sämtlichen Ausführungsformen können die ebenflächig verformten Wände, z.B. 36 und 37, innen und/oder außen ganz oder teilweise spanabhebend bearbeitet sein, um möglichst hochwertig bearbeitete, genaue Anfahrflächen für den Prüfkopf eines Ultraschallprüfgerätes zu erreichen. So sind beispielsweise bei der Ausführungsform nach Fig. 1 die ebenen Flächen auf den Bereichen 40 und 41 bzw. 42 und 43 spanabhebend nachbearbeitet worden, und zwar bevor die Schweißnaht hergestellt worden ist.

Die in der Beschreibung und in den Patentansprüchen beschriebenen und in der Zeichnung dargestellten Merkmale können sowohl einzeln als auch in beliebigen Kombinationen für die Verwirklichung der Erfindung wesentlich sein.

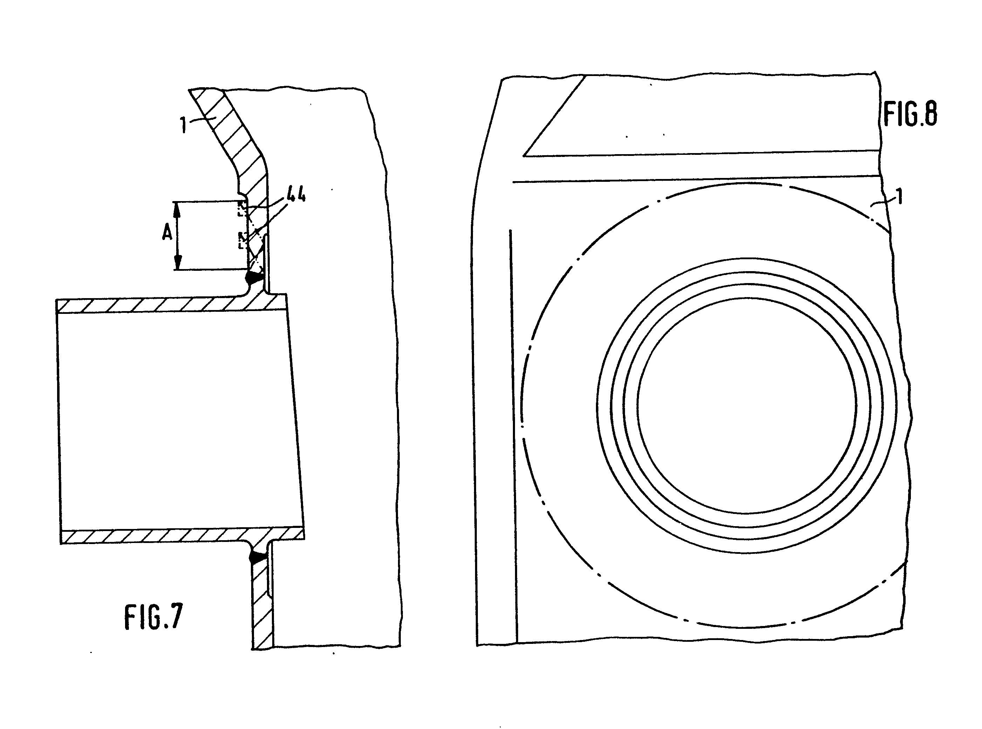

Aus Fig. 7 ist deutlich zu erkennen, daß ein Prüfkopf 44 eines Ultraschallprüfgerätes auf der Strecke A anfahren und die Schweißnaht 12 prüfen kann. Die Anfahrlänge A für den Prüfkopf 44 ergibt sich aus der Beziehung:

$$A = 2 \, tg \, \alpha \cdot s + 15 \, mm.$$

Darin bedeuten: $\alpha$ der Abstrahlwinkel des Prüfkopfes 44 in die Wand des Schiebergehäuses, und zwar in Richtung auf die Schweißnaht 12 und s die Wanddicke in dem Bereich, in dem der Prüfkopf 44 arbeiten kann. Erforderlichenfalls wird hier eine mittlere Wanddicke eingesetzt (Fig. 7, 8).

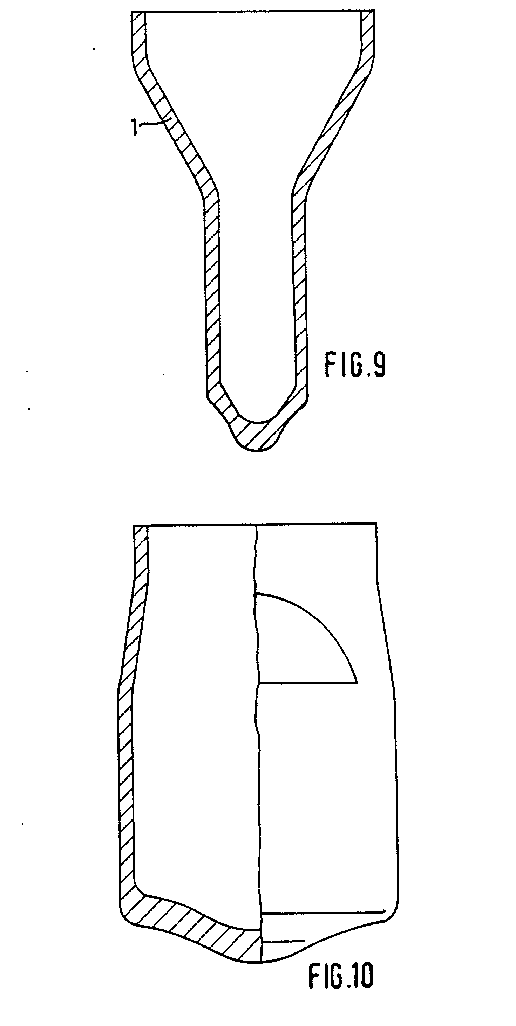

Die Figuren 9 und 10 zeigen das Schiebergehäuse 1 ohne Durchbrechungen wie es nach der Herstellung der ebenen Flächen ersichtlich ist.

## Bezugszeichenliste

1  Armaturengehäuse, Schiebergehäuse
2  Spindel
3  Absperrkörper
4  Dichtung
5  Gehäusedeckel
6  Flansch
7  Dichtung
8  Gehäuserohrstutzen
9  Gehäuserohrstutzen
10  Vorsprung
11  Vorsprung
12  Schweißnaht
13  Schweißnaht
14  Rohrvorsprung, Kragen
15  Rohrvorsprung, Kragen
16  Ventilsitzfläche
17  Ventilsitzfläche
18  Lochtopf
19  Öffnung
20  Ausstoßer
21  Matrize
22  Lochdorn, Lochstempel
23  Ausgangskörper, Rohling
24  Ziehring
25  Dornstange
26  Werkzeug
27  Abschnitt
28  Abschnitt
29  Schmiedebacke, Verformungsbacke, Preßbacke
30  Schmiedebacke, Verformungsbacke, Preßbacke
31  Ende
32  Seite
33  Seite

| | |
|---|---|
| 34 | Verformungsbacke, Schmiedebacke, Preßwerkzeug |
| 35 | Verformungsbacke, Schmiedebacke, Preßwerkzeug |
| 36 | Seitenwand |
| 37 | Seitenwand |
| 38 | dachartiger Teil |
| 39 | Längsabschnitt |
| 40 | Bereich |
| 41 | Bereich |
| 42 | Bereich |
| 43 | Bereich |
| 44 | Prüfkopf |
| | |
| A | Anfahrstrecke |
| X | Richtung |
| Y | Richtung |

Patentansprüche:

1. Verfahren zum Herstellen von in der Sicherheitstechnik - z.B. im Kernreaktorbau - mit hoher und höchster Sicherheitsstufe einsetzbaren Armaturengehäusen aus Metall, insbesondere aus Stahl, vorzugsweise Schiebergehäuse, großer bis sehr großer Nennweite, dadurch gekennzeichnet, daß ein rohrartiger Rohling (z.B. 23) etwa in seinem mittleren Längenbereich auf wenigstens zwei einander diametral gegenüberliegenden Seiten innen und außen ebenflächig bleibend verformt wird und anschließend wenigstens eine dieser ebenen Wände (z.B. 36, 37) mit einer Durchgangsöffnung zum Anschweißen eines Gehäuserohrstutzens (z.B. 9) versehen wird, deren Durchmesser erheblich geringer ist als die in diesem Bereich gemessene Quererstreckung der betreffenden ebenflächigen Wand (z.B. 36 bzw. 37), derart, daß von der äußeren Mantelfläche des Gehäuserohrstutzens (z.B. 9) bis zur Begrenzung der ebenflächigen Wand (z.B. 36) ein ausreichend großer Anfahrweg für den Prüfkopf eines Ultraschallprüfgerätes gegeben ist und/oder die betreffende Schweißnaht (z.B. 13) auch voll geröngt werden kann.

2. Verfahren nach Anspruch 1, dadurch gekennzeichnet, daß ein Block, eine Bramme oder ein Knüppel (Rohling) im Warmverformungsverfahren in eine Matrize (z.B. 21) eingebracht wird, worauf ein Lochstempel oder Lochdorn (22) unter Druckbeanspruchung den warmen Rohling (23) zu einem nur an einer Seite offenen, rohrförmigen Ausgangskörper verformt, der anschließend - ggf. nach einer Zwischenerwärmung - kalibriert und danach - ggf. wiederum nach einer Zwischenerwärmung - in seinem mittleren Längenbereich mit den wenigstens zwei ebenflächigen Wandverformungen (z.B. 36 und 37) versehen wird.

3. Verfahren nach Anspruch 1 oder 2, <u>dadurch gekenn-zeichnet</u>, daß gleichzeitig oder anschließend mit bzw. zu der Bildung der ebenflächigen Wände (z.B. 36 bzw. 37) zwei einander ebenfalls diametral gegenüberliegende, innen und außen ebenfalls ebenflächige Wände (32, 33) geformt werden, die insbesondere rechtwinklig zu den beiden anderen ebenflächigen Wänden (36, 37) verlaufen.

4. Verfahren nach Anspruch 1 oder einem der folgenden, <u>dadurch gekennzeichnet</u>, daß durch einen Preß- oder Schmiedevorgang die ebenflächigen Wände (36, 37 bzw. 32, 33) gebildet werden, die in einem senkrecht zur Längsachse geführten Querschnitt innen und außen ein rechteckförmiges Profil begrenzen.

5. Verfahren nach Anspruch 1 oder einem der folgenden, <u>dadurch gekennzeichnet</u>, daß zur Bildung der ebenflächi-gen Wände (32, 33 bzw. 36, 37) vor dem Warmverformungsvorgang ein dornförmiges Werkzeug (26) mit einem im Querschnitt rechteckförmigen Abschnitt (27) in den rohrförmigen Ausgangskörper (23) eingebracht wird, der beim Warmverformungsvorgang sich gegen die Innenwände dieses Längenabschnittes des Ausgangskörpers (23) anlegt und diese unterstützt und daß sich an den rechteckförmigen Abschnitt (27) ein zylindrischer Abschnitt (28) anschließt, der im Abstand von dem ebenflächig zu verformenden Teil des rohrförmigen Ausgangskörpers (23) die Wände dieses Ausgangskörpers (23) ebenfalls abstützt.

6. Verfahren nach Anspruch 1 oder einem der folgenden, <u>dadurch gekennzeichnet</u>, daß in die Durchgangsöffnung des Armaturengehäuses (1) der mit einem Kragen (15) versehene Rohrstutzen (z.B. 9) eingeschweißt wird.

7. Nach dem Verfahren gemäß Anspruch 1 oder einem der folgenden hergestellten Armaturengehäuse, vornehmlich Schiebergehäuse für große und sehr große Nennweiten, zur Verwendung im Sicherheitsbereich, insbesondere im Kernreaktorbau, mit einem zylindrischen, nach außen druckmitteldicht abgeschlossenen Mittelstück und wenigstens einem im etwa mittleren Bereich durch wenigstens eine Schweißnaht befestigten Rohrstutzen, einem Absperrkörper und diesem zugeordneten Ventilsitzen, mit denen der Absperrkörper dichtend zusammenwirken kann, dadurch gekennzeichnet, daß das Armaturengehäuse (1) auf mindestens zwei diametral einander gegenüberliegenden Seiten - vorzugsweise indessen auf vier je paarweise einander gegenüberliegenden Seiten (32, 33 bzw. 36, 37) - jeweils innen und außen durch spanlose Verformung hergestellte, großflächig ausgebildete Wände aufweist, wobei in mindestens einer dieser Wände (z.B. 36) eine Durchbrechung vorgesehen ist, in der ein Gehäuserohrstutzen (z.B. 9) eingeschweißt ist, der mit einem Vorsprung (15) ins Gehäuseinnere hineinragt und einen Teil des Ventilsitzes bildet und daß sich an diesen im Querschnitt polygonformigen, insbesondere rechteckförmigen Teil des Gehäuses (1), über einen etwa kegelstumpfförmig oder dachförmig verlaufenden, damit materialmäßig einstückig ausgebildeten Gehäuseteil (38) ein ebenfalls damit materialmäßig einstückig ausgebildeter zylindrischer Gehäuseteil (39) anschließt, der stirnseitig druckmitteldicht abgeschlossen ist.

8. Armaturengehäuse nach Anspruch 9, dadurch gekennzeichnet, daß der Anfahrweg (A) für einen Prüfkopf (44) eines Ultraschallprüfgerätes wie folgt bemessen ist: $A = 2 \text{ tg } \mathcal{L} \cdot s + 15$ mm, worin bedeuten: A = Anfahrweg für den Prüfkopf; $\mathcal{L}$ = Abstrahlungswinkel des Prüfkopfes in Richtung auf die Schweißnaht; s = Wanddicke im Bereich der zu prüfenden Wand, und daß die Anfahrfläche innen und/oder außen (46/47) spanabhebend bearbeitet ist.

0010614

FIG.1

0010614

FIG.2

FIG.3

FIG.4

FIG.5

FIG.6

FIG.7

FIG.8

A

1

44

4/5

0010614

5/5

FIG.9

FIG.10

0010614

Nummer der Anmeldung

EP 79 103 650.2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 057 746 (SIEPMANN-WERKE KG) <br> * Anspruch 1; Fig. 1 * <br> -- | 1 |
| D | DE - A - 1 928 686 (SIEPMANN-WERKE KG) <br> * Anspruch 1 * <br> -- | 1 |
| D | DE - B2 - 2 164 929 (PREUSSAG AG) <br> * ganzes Dokument * <br> -- | |
| A | DE - C - 1 114 683 (SIEPMANN GMBH KG) <br> * ganzes Dokument * <br> -- | |
| A | DE - U - 1 694 648 (POTTHOFF & FLUME) <br> * ganzes Dokument * <br> ---- | |

### KLASSIFIKATION DER ANMELDUNG (Int.Cl.³)

B 21 K 1/20

F 16 K 27/10

### RECHERCHIERTE SACHGEBIETE (Int. Cl.³)

B 21 K 1/00

F 16 K 27/00

G 21 D 1/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Berlin | 16-01-1980 | SCHLAITZ |

EPA form 1503.1  06.78